# EUROPÄISCHE PATENTSCHRIFT

(11) **EP 1 291 504 B1**
(45) Veröffentlichungstag und Bekanntmachung des Hinweises auf die Patenterteilung: **21.02.2007**
(21) Anmeldenummer: 02018742.3
(22) Anmeldetag: 22.08.2002
(51) Int. Cl.: F02B 27/02

(54) **Schaltklappeneinrichtung**
Control valve assembly
Dispositif de volets de commande

(30) Priorität: 05.09.2001 DE 10143384
(43) Veröffentlichungstag der Anmeldung: 12.03.2003
(73) Patentinhaber: Pierburg GmbH, 41460 Neuss (DE)
(72) Erfinder: Hüsges, Hans-Jürgen, 47877 Willich (DE); Corbach, Peter, 44879 Bochum (DE); Sovva, Elina, 47167 Duisburg (DE)
(74) Vertreter: von Kirschbaum, Alexander

(56) Entgegenhaltungen:
- EP-A- 1 028 238
- EP-A- 1 251 253
- DE-A- 19 651 642
- DE-A- 19 936 470
- DE-A- 19 946 861
- US-A- 5 715 782

## Beschreibung

Die Erfindung betrifft eine Schaltklappeneinrichtung zur Aufnahme mehrerer Schaltklappen für ein Luftansaugkanalsystem einer Brennkraftmaschine.

Ein aus DE 196 14 474 bekanntes Luftansaugkanalsystem weist für jeden Zylinder einen spiralförmig verlaufenden Luftansaugkanal auf. Hierbei erfolgt das Ansaugen der Luft über einen zentralen, innerhalb der spiralförmigen Ansaugkanäle angeordneten Sammel-Einlasskanal. Durch den für sämtliche Luftansaugkanäle gemeinsam vorgesehenen Sammel-Einlasskanal wird Luft angesaugt und über die einzelnen Luftansaugkanäle zur Brennkraftmaschine geleitet. Zum Verändern der Länge des Luftansaugkanals ist ein Kurzschlusskanal vorgesehen. Dieser mit einer Klappe öffen- und verschließbare Kurzschlusskanal ist mit dem Sammel-Einlasskanal und jeweils einem Luftansaugkanal verbunden. In dem Kurzschlusskanal ist eine Klappe angeordnet um den Kurzschlusskanal zu öffnen oder zu schließen. Die einzelnen Schaltklappen sind über eine gemeinsame Welle miteinander verbunden. Die Lagerung der Welle erfolgt in dem Gehäuse des Luftansaugkanalsystems. Hierzu weist das Luftansaugkanalsystem zwei Gehäusehälften auf, wobei die Schaltwelle zwischen die Gehäusehälften eingelegt wird. Bei der Montage der Schaltwelle müssen zusätzlich Lagerungen für die Schaltwelle in den Gehäusehälften des Luftansaugkanalsystems vorgesehen werden. Die Montage der Schaltklappen in dem Luftansaugkanalsystem ist daher aufwendig. Ferner muss die Gehäusetrennung der beiden Gehäusehälften des Luftansaugkanalsystems exakt durch die Lagerungen für die Schaltwelle gelegt werden. Somit entfällt jegliche Variationsmöglichkeit der Gehäusetrennung, die beispielsweise zur Lösung anderer Probleme dienen kann.

In DE 199 46 861 ist das Anordnen mehrer Schaltklappen für ein Ansaugsystem in einem gemeinsamen Einlegerahmen beschrieben. Es handelt sich hierbei um die Ansaugsystems für eine Brennkraftmaschine, wobei mit Hilfe der Stellung, der Schaltklappe der Querschnitt der einzelnen Ansaugrohre variiert werden kann.

Die Druckschrift US 5.715.782 beschreibt den Oberbegriff des Anspruchs 1.

Ferner ist in US 5,101,792 beschrieben, dass zwei Schaltwellen über einen Verbindungsmechanismus mit einem gemeinsamen Antrieb verbunden sein können. Hierbei handelt es sich um einzeln montierte Schaltwellen, die nicht in einem Einlegerahmen vormontiert sind.

Aufgabe der Erfindung ist es, die Montierbarkeit von Schaltklappen für ein Luftansaugkanalsystem zu vereinfachen.

Die Lösung der Aufgabe erfolgt erfindungsgemäß durch die Merkmale des Anspruchs 1.

Erfindungsgemäß ist eine Schaltklappeneinrichtung vorgesehen, die ZWEI Einlegrahmen aufweist. Die Einlegrahmen tragen die Schaltklappen und die jeweils eine Schaltwelle. Es ist somit möglich, die Schaltklappen und die Schaltwelle in dem jeweiligen Einlegrahmen vorzumontieren und bei der Montage des Luftansaugkanalsystems die Einlegrahmen zusammen mit den vormontierten Schaltklappen und der vormontierten Schaltwelle einzubauen. Erfindungsgemäß sind die beiden Einlegerahmen einstückig ausgebildet und können somit gemeinsam montiert werden. Durch das Vorsehen des erfindungsgemäßen Einlegrahmens ist es nicht mehr nötig, bei der Montage mehrere Lagerschalen für die Schaltwelle in den Gehäusehälften des Luftansaugkanalsystems zu montieren. Ein besonderer Vorteil des erfindungsgemäßen Vorsehens eines Einlegrahmens insbesondere gegenüber dem in DE 196 14 474 beschriebenen Luftansaugkanalsystems, besteht darin, dass die Schaltwelle nicht mehr in der Gehäuseteilung vorgesehen sein muss. Die Gestaltung der Gehäusehälften des Luftansaugkanalsystems ist somit flexibler.

Bei einer besonders bevorzugten Ausführungsform weist der Einlegrahmen Wände auf, die zumindest teilweise einen Kurzschlusskanal des Luftansaugkanalsystems bilden. Durch den von dem Einlegrahmen zumindest teilweise ausgebildeten Kurzschlusskanal wird der Sammelkanal mit dem Luftansaugkanal zur Verkürzung der Luftansaugkanallänge verbunden. Vorzugsweise ist der gesammte Kurzschlusskanal von dem Einbaurahmen gebildet. Dies hat den Vorteil, dass die Gestaltung des Luftansaugkanalsystems vereinfacht ist. Dies ist insbesondere bei der Herstellung des Luftansaugkanalsystems im Druckgussverfahren vorteilhaft, da einfachere Gussformen verwendet werden können. Insbesondere sind hierdurch Hinterschneidungen vermieden.

Mindestens eine der Wände des Einbaurahmens, durch die die einzelnen Kurzschlusskanäle gebildet sind, ist als Strömungskontur ausgebildet. Somit ist zumindest eine Wand des Kurzschlusskanals derart ausgebildet, dass ein günstiges vorzugsweise laminares Strömungsverhalten in dem Luftansaugkanal realisiert ist.

Vorzugsweise sind die Wände des Einbaurahmens, die die Kurzschlusskanäle bilden, und/oder die Schaltklappen selbst mit einer Dichtung versehen. Durch Vorsehen einer Dichtung ist ein einwandfreies Schließen des Kurzschlusskanals möglich. Bei der Dichtung handelt es sich vorzugsweise um eine Elastomerdichtung. Die Dichtung ist vorzugsweise an die Schaltklappen angespritzt.

Hierzu weisen die Schaltklappen Ausnehmungen, wie beispielsweise durchgehende Öffnungen auf, so dass die Elastomerdichtung sicher an den Schaltklappen gehalten ist.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht eines Luftansaugkanalsystems mit einer ersten Ausführungsform der Schaltklappenein richtung,
- Fig.2: eine schematische Draufsicht der in Fig. 1 dargestellten Schaltklappeneinrichtung,
- Fig. 3: eine Schnittansicht entlang der Linie III-III in Fig. 2 und
- Fig. 4: eine schematische perspektivische Ansicht einer zweiten erfindungsgemäßen Ausführungsform der Schaltklappeneinrichtung.

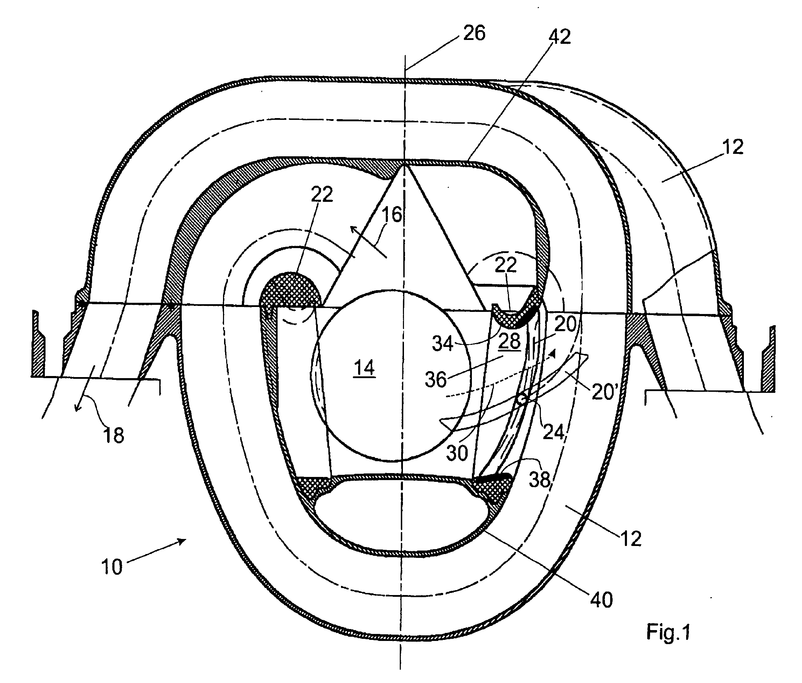

Ein Luftansaugkanalsystem 10 weist mehrere spiralförmige Luftansaugkanäle 12 auf. Die Luftansaugkanäle 12 sind jeweils mit einem Zylinder einer Brennkraftmaschine verbunden. Bei dem in Fig. 1 dargestellten Luftansaugkanalsystem 10 handelt es sich um ein Luftansaugkanalsystem für einen V-Motor. Die Luft wird über einen gemeinsamen Sammel-Einlasskanal 14 angesaugt und in einem ersten Ansaugzustand mit langem Ansaugkanal in Richtung eines Pfeils 16 in den Ansaugkanal 12 eingesaugt und in Richtung eines Pfeils 18 zum Verbrennungsmotor geleitet.

Um den Luftansaugkanal zu verkürzen, ist je Luftansaugkanal 12 eine Schaltklappe 20 vorgesehen. Die Schaltklappe 20 ist in einem Einlegrahmen 22 gehalten und um eine in dem Einlegrahmen 22 gelagerte Schaltwelle 24 schwenkbar.

Das Luftansaugkanalsystem 10 ist im Wesentlichen zu einer Achse 26 symmetrisch aufgebaut, wobei je Seite eines 6-Zylinder V-Motors drei Ansaugkanäle 12 in Fig. 1 nach links und drei Ansaugkanäle 12 in Fig. 1 nach rechts führen. Für die nach rechts führenden Ansaugkanäle ist ebenfalls ein Einlegrahmen 23 vorgesehen, dessen Klappen in Fig. 1 nicht sichtbar sind.

Zum Öffnen eines Kurzschlusskanals 28 kann die Schaltklappe 20 um die Schaltwelle 24 in eine mit 20' bezeichnete Stellung geschwenkt werden. Zumindest ein Teil der durch den Sammel-Einlasskanal 14 angesaugten Luft strömt sodann in Richtung eines Pfeils 30 in den Luftansaugkanal 12.

Bei einem 6-Zylinder V-Motor sind zwei Einlegrahmen 22 vorgesehen, die jeweils drei mit jeweils einer gemeinsamen Welle 24 verbundene Schaltklappen 20 aufweisen. Die Schaltklappen 20 sind zusammen mit der Welle 24 aus einem Stück hergestellt. Vorzugsweise handelt es sich hierbei um ein Kunststoffteil, das beispielsweise im Spritzgussverfahren hergestellt wurde. Die Schwenkwelle 24 ist in dem Einlegrahmen 22 schwenkbar gelagert. Hierzu sind in dem Einlegrahmen 22 nicht dargestellte Lagerschalen vorgesehen, die ebenfalls aus Kunststoff hergestellt sein können. Jede Schaltklappe 20 ist mit einer Dichtung 32 versehen, durch die in geschlossenem Zustand ein dichtes Verschließen des Kurzschlusskanals 28 erfolgt. Die Dichtungen 32 sind vorzugsweise aus elastomerem Kunststoff hergestellt und an die Schwenkklappen 20 angespritzt. Um ein sicheres Verbinden der Dichtungen 32 mit den Schwenkklappen 20 zu gewährleisten, weisen die Schwenkklappen 20 Ausnehmungen oder Vertiefungen auf, in die der Kunststoff eindringt. Hier entsteht nach dem Aushärten des elastomeren Kunststoffs eine annähernd formschlüssige Verbindung zwischen den Dichtungen 32 und den Schwenkklappen 20. Insbesondere handelt es sich bei den Ausnehmungen um durchgehende Löcher, so dass beim Umspritzen der Schwenkklappen 20 durch diese Löcher verlaufende Stege aus elastomerem Material ausgebildet sind, die ein sicheres Halten der Dichtung 32 an den Schwenkklappen 20 sicherstellen.

Zusätzlich oder anstatt der Dichtung 32 können auch an den Innenwänden 34, 36, 38 (Fig. 1) Dichtungen vorzugsweise aus elastomerem Material vorgesehen sein. An der der Innenwand 36 gegenüberliegenden Innenwand, die in Fig. 1 nicht sichtbar ist, ist ebenfalls vorzugsweise eine Dichtung vorgesehen, so dass der Kurzschlusskanal 28 eine umlaufende Dichtung an seinen Innenwänden aufweist.

Ein besonderer Aspekt der Erfindung besteht darin, dass die beiden Einlegrahmen 22 jeweils mehrere Kurzschlusskanäle 28 ausbilden. Erfindungsgemäß ist hierbei vorzugsweise der gesamte Kurzschlusskanal 28 durch den Einlegrahmen 22 ausgebildet. Dies vereinfacht die Herstellung des Luftansaugkanalsystems 10 erheblich, da sich die Anzahl der Hinterschneidungen verringert, die beim Gießen der beiden das Luftansaugkanalsystem 10 bildenden Hälften 40, 42 bzw. Einlegteilen 40,42 insbesondere bei Druckgußverfahren nachteilig sind.

Besonders bevorzugt ist die Ausbildung der Innenwand 34 des Einlegrahmens 22 in der Art, dass durch diese eine Strömungskontur ausgebildet ist. Vorzugsweise verläuft die Innenwand 34 konvex in Richtung des durch den Pfeil 30 angedeuteten Strömungsverlaufs. Hierdurch ist ein laminarer Verlauf der Strömung gefördert.

Das Verschwenken der Schwenkklappen 20 erfolgt mit Hilfe eines Stellmotors, der über einen Hebel oder eine Stange mit einem mit dem der Schwenkwelle 24 verbundenen Antriebshebel 44 verbunden ist. Um die beiden Wellen 24, die in den beiden Einlegrahmen 22 vorgesehen sind, über einen gemeinsamen Antrieb antreiben zu können, weisen die beiden Wellen 24 einen Ansatz 46 auf. Die beiden Ansätze 46 sind über eine Verbindungsstange miteinander verbunden. Dies hat zur Folge, dass beim Schwenken der einen mit dem Antrieb verbundenen Welle 24 automatisch die zweite in dem gegenüberliegenden Einlegrahmen 22 angeordnete Welle mit verschwenkt wird.

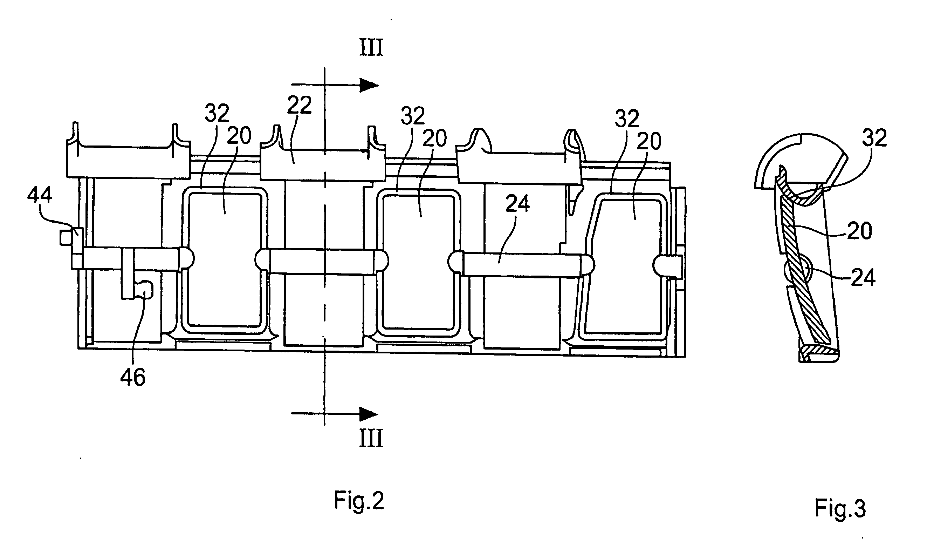

Zur Montage werden die Wellen 24, die zusammen mit den Schaltklappen 20 aus einem Stück hergestellt sind, in den Einlegrahmen 22 in der vorgesehenen Lage eingelegt und dort fixiert. Anschließend werden die vormontierten Einlegrahmen 22 in die erste Gehäusehälfte 40 (Fig. 1) eingelegt. Der nächste Schritt erfolgt im Verbinden der beiden Ansätze 46 (Fig. 2) der Schaltwellen 24 sowie im Verbinden einer der beiden Ansätze 44 einer der beiden Schaltwellen 24 mit dem Antrieb. Der Ansatz 44 ist beim dargestellten Ausführungsbeispiel ein Teil einer Kupplung, um Fluchtfehler der Welle zum außerhalb des Saugrohrs befindliche Antriebshebel auszugleichen. Anschließend wird die zweite Gehäusehälfte 42 auf die erste Gehäusehälfte 40 aufgesetzt und mit dieser fest verbunden.

Zur Erleichterung der Montage können die beiden Einlegrahmen 22 auch über einen Steg oder dergleichen miteinander verbunden sein, so dass die beiden Einlegrahmen 22 einstückig sind und gemeinsam in die erste Gehäusehälfte 40 eingelegt werden können.

Bei einer besonders bevorzugten Ausführungsform ist der Einlegrahmen 22 und die Schaltwelle 24 zusammen mit den daran befestigten Schaltklappen 20 aus einem Stück hergestellt. Dies ist durch den Zwei-Komponenten-Guss von Kunststoff möglich, wenn es sich um relativ einfach gestaltete Bauteile handelt. Trotz des Herstellens der beiden gegeneinander verschwenkbaren Teile in einem Gussverfahren, ist die Schaltwelle 24 in dem Einlegrahmen 22 innerhalb des erforderlichen Verschwenkungswinkels frei drehbar.

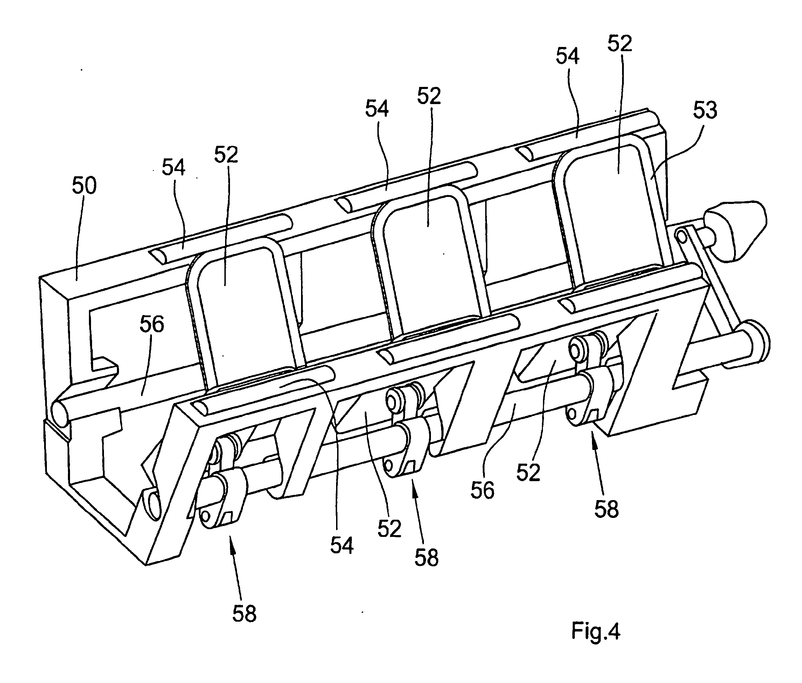

Bei der in Fig. 4 dargestellten zweiten erfindungsgemäßen Ausführungsform handelt es sich prinzipiell ebenfalls um einen dem Einlegrahmen 22 entsprechenden Einlegrahmen 50, der ebenfalls in ein Luftansaugkanalsystem 10 für den V-Motor eingelegt werden kann. Im Unterschied zu der vorstehend beschriebenen Ausführungsform sind die Schaltklappen 52 bei dieser Ausführungsform nicht mittig zusammen mit einer Schaltwelle gelagert. Vielmehr erfolgt die Lagerung der Schaltklappen 52 gesondert über Schwenkachsen 54, die in den Einlegrahmen 50 eingelegt sind. Die in Fig. 4 auf einer Seite des Einlegrahmens 50 nebeneinander angeordneten Schaltklappen 52 können auch über eine gemeinsame Welle 54 gelagert werden. Zum Schwenken der Schaltklappen 52 sind zwei ebenfalls in dem Einlegrahmen 50 gelagerte Schaltwellen 56 vorgesehen. Die Schaltwellen 56 sind über einzelne Kniehebelmechanismen 58 mit den einzelnen Schaltklappen 52 verbunden.

Entsprechend der anhand Fign. 1 - 3 beschriebenen Ausführungsform ist die Montage durch das Vorsehen des Einlegrahmens 50, in dem die Schaltklappen 52 an die Schaltwellen 56 etc. vormoniert werden können, erheblich vereinfacht. In Fig. 4 sind die einander gegenüberliegenden Reihen an Schaltklappen 52 in einem gemeinsamen Einlegrahmen 50 gehalten. Selbstverständlich ist es, wie in Fig. 1 dargestellt, auch möglich, zwei gesonderte Einlegrahmen vorzusehen.

## Patentansprüche

1. Schaltklappeneinrichtung zur Aufnahme mehrerer Schaltklappen (20, 52) für ein Luftansaugkanalsystem (10) einer Brennkraftmaschine, mit
zwei Einlegerahmen (22, 50), die jeweils Schaltklappen (20, 52) und zwei mit den Schaltklappen zum gemeinsamen Schalten verbundene Schaltwellen (24, 56) tragen, wobei die Einlegerahmen (22, 50) mit vormontierten Schaltklappen (20, 52) und vormontierten Schaltwellen (24, 56) in das Luftansaugsystem (10) einbaubar sind,
**dadurch gekennzeichnet,**
**dass** die beiden Schaltwellen (24, 56) über eine Verbindungsstange mit einem gemeinsamen Antrieb verbunden sind, und
**dass** die beiden Einlegerahmen (22, 50) einstückig ausgebildet sind.

2. Schaltklappeneinrichtung nach Anspruch 1, **dadurch gekennzeichnet, dass** Wände (34, 36, 38) des Einlegrahmens (22, 50) zumindest teilweise einen Kurzschlusskanal (28) des Luftansaugkanalsystems (10) bilden.

3. Schaltklappeneinrichtung nach Anspruch 2, **dadurch gekennzeichnet, dass** mindestens eine der den Kurzschlusskanal (28) bildenden Wände (34, 36, 38) eine Strömungskontur aufweist.

4. Schaltklappeneinrichtung nach Anspruch 2 oder 3, **dadurch gekennzeichnet, dass** die Innenwand (34) konvex in Richtung des Strömungsverlaufs (30) gekrümmt ist.

5. Schaltklappeneinrichtung nach einem der Ansprüche 1-4, **dadurch gekennzeichnet, dass** die Schaltwelle (24, 56) in dem Einlegrahmen (22, 50) gelagert ist.

6. Schaltklappeneinrichtung nach einem der Ansprüche 1-5, **dadurch gekennzeichnet, dass** die Wände (34, 36, 38) und/oder die Schaltklappen (20, 52) mit einer Dichtung (32, 53) versehen sind.

7. Schaltklappeneinrichtung nach Anspruch 6, **dadurch gekennzeichnet, dass** die Schaltklappen (20, 52) zum Halten der Dichtung (32, 53) Ausnehmungen aufweisen.

8. Schaltklappeneinrichtung nach einem der Ansprüche 1-7, **dadurch gekennzeichnet, dass** die Schaltwelle (24) und die Schaltklappen (20) einstückig sind, so dass die Schaltklappen (20) mittels der Schaltwelle (24) in dem Einlegrahmen (22) gehalten sind.

9. Schaltklappeneinrichtung nach einem der Ansprüche 1-7, **dadurch gekennzeichnet, dass** die Schaltklappen (52) unabhängig von der Schaltwelle (56) in dem Einlegrahmen (50) gelagert sind und die Schaltklappen (52) vorzugsweise über Kniehebelmechanismen (58) mit der Schaltwelle (56) verbunden sind.

## Claims

1. A switching flap means for receiving a plurality of switching flaps (20, 52) for an air-intake conduit system (10) of an internal combustion engine, comprising
two insertion frames (22, 50), each carrying switching flaps (20, 52) and two switching shafts (24, 56) connected with the switching flaps for common switching, the insertion frames (22, 50) being adapted to be mounted into the air-intake system (10) with both the switching flaps (20, 52) and the switching shafts (24, 56) being preassembled,
**characterized in**
**that** the two switching shafts (24, 56) are connected to a common drive via a connecting rod, and
**that** the two insertion frames (22, 50) are of a single-piece configuration.

2. The switching flap means of claim 1, **characterized in that** walls (34, 36, 38) of the insertion frame (22, 50) at least partly form a bypass channel (28) of the air-intake conduit system (10).

3. The switching flap means of claim 2, **characterized in that** at least one of the walls (34, 36, 38) forming the bypass channel (28) has a flow contour.

4. The switching flap means of claim 2 or 3, **characterized in that** the inner wall (34) is curved convexly in the direction of the flow path (30).

5. The switching flap means of one of claims 1-4, **characterized in that** the switching shaft (24, 56) is supported at the insertion frame (22, 50).

6. The switching flap means of one of claims 1-5, **characterized in that** the walls (34, 36, 38) and/or the switching flaps (20, 52) are provided with a seal (32, 53).

7. The switching flap means of claim 6, **characterized in that** the switching flaps (20, 52) have recesses for retaining the seal (32, 53).

8. The switching flap means of one of claims 1-7, **characterized in that** the switching shaft (24) and the switching flaps (20) are integral, so that the switching flaps (20) are retained in the insertion frame (22) by means of the switching shaft (24).

9. The switching flap means of one of claims 1-7, **characterized in that** the switching flaps (52) are supported at the insertion frame (50) independently of the switching shaft (56), and the switching flaps (52) are connected to the switching shaft (56) preferably through toggle lever mechanisms (58).

## Revendications

1. Dispositif de volets de commutation pour la réception de plusieurs volets de commutation (20, 52) pour un système de conduits d'admission d'air (10) d'un moteur à combustion interne, comprenant
deux cadres d'insertion (22, 50), qui supportent respectivement des volets de commutation (20, 52) et deux arbres de commutation (24, 56) reliés aux volets de commutation en une commutation commune, les cadres d'insertion (22, 50) pouvant être incorporés avec des volets de commutation (20, 52) pré-montés et des arbres de commutation (24, 56) pré-montés dans le système de conduits d'admission d'air (10),
**caractérisé en ce que**
les deux arbres de commutation (24, 56) sont reliés à un entraînement commun par l'intermédiaire d'une tige de liaison, et
les deux cadres d'insertion(22, 50) sont d'un seul tenant.

2. Dispositif de volets de commutation suivant la revendication 1, **caractérisé en ce que** des parois (34, 36, 38) du cadre d'insertion (22, 50) forment au moins en partie un conduit de court-circuit (28) du système de conduits d'admission d'air (10).

3. Dispositif de volets de commutation suivant la revendication 2, **caractérisé en ce qu'**au moins l'une des parois (34, 36, 38) formant le conduit de court-circuit (28), présente un contour d'écoulement.

4. Dispositif de volets de commutation suivant l'une des revendications 2 ou 3, **caractérisé en ce que** la paroi intérieure (34) est courbée de manière convexe dans la direction du parcours d'écoulement (30).

5. Dispositif de volets de commutation suivant l'une des revendications 1 - 4, **caractérisé en ce que** l'arbre de commutation (24, 56) est monté dans le cadre d'insertion (22, 50).

6. Dispositif de volets de commutation suivant l'une des revendications 1 - 5, **caractérisé en ce que** les parois (34, 36, 38) et/ou les volets de commutation (20, 52) sont munis d'un joint d'étanchéité (32, 53).

7. Dispositif de volets de commutation suivant la revendication 6, **caractérisé en ce que** les volets de commutation (20, 52) sont pourvus d'évidements pour maintenir le joint d'étanchéité (32, 53).

8. Dispositif de volets de commutation suivant l'une des revendications 1 - 7, **caractérisé en ce que** l'arbre de commutation (24) et les volets de commutation (20) sont d'un seul tenant, de sorte que les volets de commutation (20) sont maintenus au moyen de l'arbre de commutation (24) dans le cadre d'insertion (22).

9. Dispositif de volets de commutation suivant l'une des revendications 1 - 7, **caractérisé en ce que** les volets de commutation (52) sont montés indépendamment de l'arbre de commutation (56) dans le cadre d'insertion (50) et les volets de commutation (52) sont de préférence reliés à l'arbre de commutation (56) par l'intermédiaire de mécanismes de leviers à genouillère (58).
